# EUROPÄISCHE PATENTSCHRIFT

(11) **EP 0 790 444 B1**
(45) Veröffentlichungstag und Bekanntmachung des Hinweises auf die Patenterteilung: **13.04.2005**
(21) Anmeldenummer: 97101717.3
(22) Anmeldetag: 04.02.1997
(51) Int. Cl.: F16J 15/08

(54) **Metallische Zylinderkopfdichtung**
Metallic cylinder head gasket
Joint de culasse métallique

(30) Priorität: 17.02.1996 DE 19605871
(43) Veröffentlichungstag der Anmeldung: 20.08.1997
(73) Patentinhaber: Elring Klinger AG, 72581 Dettingen (DE)
(72) Erfinder: Diez, Armin, 73252 Lenningen (DE); Werz, Ulrich, 72581 Dettingen (DE); Griesinger, Eberhard, 72574 Bad Urach (DE)
(74) Vertreter: Sparing - Röhl - Henseler Patentanwälte

(56) Entgegenhaltungen:
- EP-A- 0 230 804
- EP-A- 0 695 896
- DE-U- 9 414 941

## Beschreibung

Die Erfindung betrifft eine metallische Zylinderkopfdichtung nach dem Oberbegriff des Anspruchs 1 bzw. 2.

Aus der EP 0 306 766 C1 bzw. der EP 0 230 804 C1 ist eine derartige metallische Zylinderkopfdichtung für eine Brennkraftmaschine bekannt, bei der ein Trägerblech zusammen mit mindestens einem gesickten Deckblech als Funktionsblech vorgesehen ist. Da sich der Dichtspalt zwischen Zylinderkopf und -block einer Brennkraftmaschine im Betrieb in Abhängigkeit vom Arbeitstakt des jeweils betrachteten Zylinders ändert, ist die Dichtung ständigen Pressungsänderungen unterworfen und muß zur Aufrechterhaltung einer einwandfreien Abdichtung dauerhafte Federungseigenschaften aufweisen.

. Die Abdichtung wird hierbei durch eine Überhöhung der Zylinderkopfdichtung entlang des Brennraums und durch eine dahinter liegende Sicke vorgenommen. Letztere wirkt als Federelement und folgt den infolge des Zünddrucks auftretenden vertikalen Relativbewegungen des Zylinderkopfs gegenüber dem Zylinderblock. Einerseits darf bei maximal belasteter Sicke keine unzulässig große Verformung auftreten, andererseits darf die Entlastung nicht vollständig, sondern nur soweit erfolgen, daß eine Mindestverformung beim höchsten auftretenden Brennraumdruck die erforderliche Abdichtung sicherstellt. Zwischen diesen beiden Eckpunkten der Verformung liegt der Arbeitsbereich der Sicke.

Um die Funktion der Sicke sicherzustellen, darf die Sicke somit weder beim Einbau der Dichtung, noch im Betriebszustand vollständig verformt werden. Eine unzulässig große Verformung der Sicke vertikal zur Dichtungsebene wird bei den bekannten Dichtungen durch einen Verformungsbegrenzer gleichbleibender Stärke verhindert, der zugleich zur Überhöhung der Dichtung entlang des Brennraums dient.

Es hat sich jedoch gezeigt, daß die Abdichtung derartiger Zylinderkopfdichtungen bei neueren, gewichtssparend ausgelegten und leistungsstarken Motoren nicht immer ausreichend ist. Dies liegt offenbar an den unterschiedlichen Steifigkeiten der Motorbauteile, durch die sich im eingebauten Zustand der Dichtung hinsichtlich der Sicke eine unterschiedliche Kraftverteilung entlang des Brennraumumfangs ergibt. Im Schraubenbereich, wo der Zylinderkopf mit dem Zylinderblock verschraubt ist, treten hohe Verspannungskräfte auf, so daß die Sicke dort bei Zünddruck nur geringfügig aus ihrer vom Verformungsbegrenzer festgelegten Position der maximal zulässigen Verformung herausfedern kann. Dagegen kann die Sicke im Zwischenschraubenbereich, wo niedrigere Verspannungskräfte herrschen, aus einem vergleichsweise niedrigeren Verformungsgrad heraus weiter ausfedern.

Hierdurch und infolge der geringen Auflagefläche der gesickten Funktionslage (Deckblech) auf dem Verformungsbegrenzer kommt es zu Vertiefungen oder Eingrabungen des Bereichs des Verformungsbegrenzers in den Zylinderkopf. Hierdurch werden aber die Eckpunkte des Arbeitsbereichs der Sicke verändert, so daß die maximal zulässige Verformung der Sicke überschritten werden kann. Dies kann zum Bruch im Sickenbereich führen.

Werden für Zylinderkopf und -block Materialien mit unterschiedlichen Wärmeausdehnungskoeffizienten gewählt (etwa ein Graugußblock mit einem Leichtmetallkopf), wird die Sicke noch zusätzlich in Richtung der Dichtungsebene beansprucht.

Aufgabe der Erfindung ist es, eine metallische Zylinderkopfdichtung nach dem Oberbegriff des Anspruchs 1 bzw. 2 zu schaffen, bei der die maximal zulässige Verformung der Sicke auch bei längerem Betrieb nicht überschritten wird.

Diese Aufgabe wird entsprechend dem kennzeichnenden Teil des Anspruchs 1 bzw. 2 gelöst.

Hierbei wird der jeweilige Überhöhungsabschnitt durch eine im wesentlichen trapezförmige Sicke im Trägerblech, die benachbart zum Öffnungsrand im Bereich einwärts von der Sicke des Deckblechs angeordnet ist, und entweder durch eine entsprechende Sicke eines zusätzlichen hierzu spiegelsymmetrischen Trägerblechs oder durch einen Ring gebildet, der auf der konkaven Seite der im wesentlichen trapezförmigen Sicke diese überdeckend angeordnet ist. Auf diese Weise kann je nach Material des Trägerblechs ein elastisch oder plastisch verformbarer Verformungsbegrenzer für die Sicken der Deckbleche gebildet werden, wobei beide Typen zur Vergleichmäßigung der Pressungsverteilung über den Brennraumumfang führen.

Die bewirkte Vergleichmäßigung der Pressungsverteilung bedeutet im Bereich der Zylinderkopfschrauben eine Begrenzung der Pressung auf einen auszulegenden Höchstwert und im Bereich zwischen den Zylinderkopfschrauben einen vergleichsweise geringeren Pressungabfall. Beides wird durch Vorsehen der elastisch oder plastisch verformbaren trapezförmigen Sicke erreicht, so daß bei Montage der Zylinderkopfdichtung eine entsprechende partielle Verformung dieser Sicke im Zylinderkopfschraubenbereich bei Erreichen des auslegungsgemäßen Pressungshöchstwertes eintritt. Auf diese Weise stellt sich die Zylinderkopfdichtung quasi von selbst auf die Steifigkeits- und Kräfteverhältnisse ein und bewirkt in Bereichen hoher Bauteilsteifigkeiten durch Begrenzung der Pressung zudem eine Verringerung der Gefahr von Eingrabungen im Zylinderkopf. In Bereichen niedrigerer Bauteilsteifigkeiten ergibt sich eine vergleichsweise größere Verformung der die Zylinderkopfdichtung verspannenden Bauteile mit der Folge einer erhöhten Pressung.

Auch im Hinblick auf den zu beobachtenden Schwingungsreibverschleiß ist die Vergleichmäßigung der Pressungsverteilung günstig. Bei vergleichbarem Reibbeiwert verringert die höhere Pressung die horizontale Dynamik der Zylinderkopfdichtung.

Weitere Ausgestaltungen der Erfindung sind der nachfolgenden Beschreibung und den Unteransprüchen zu entnehmen.

Die Erfindung wird nachstehend anhand von in den beigefügten Abbildungen dargestellten Ausführungsbeispielen näher erläutert.

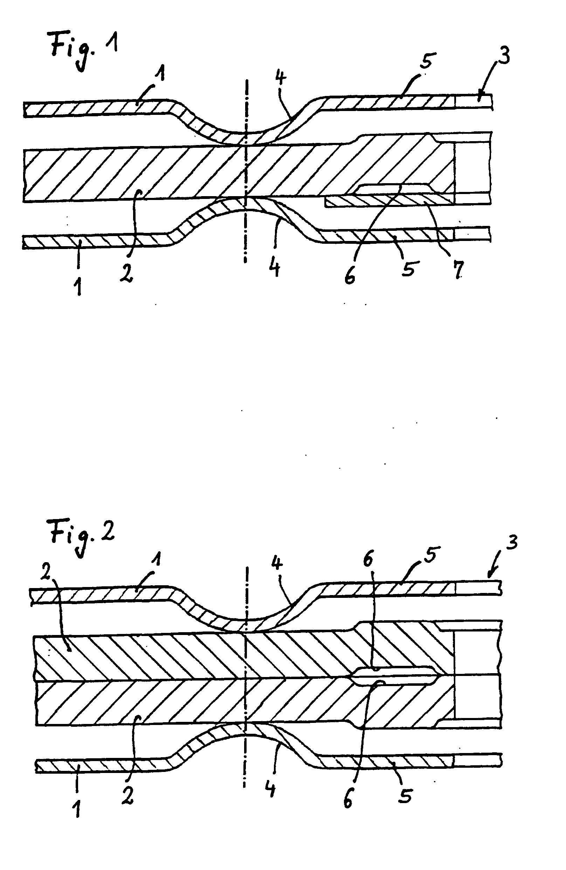

Fig. 1 und 2 zeigen schematisch und ausschnittweise Schnitte von verschiedenen Ausführungsformen von Zylinderkopfdichtungen.

Die in Fig. 1 dargestellte mehrlagige Zylinderkopfdichtung umfaßt zwei Deckbleche 1 als Funktionslagen sowie ein Trägerblech 2. Die Dichtung, d.h. die Deckbleche 1 und das Trägerblech 2, ist mit in einer Reihe nebeneinander angeordneten Öffnungen 3 entsprechend den Brennräumen der zugehörigen Brennkraftmaschine (sowie Schraubendurchtrittslöchern für Schrauben, die zum Verspannen von Zylinderkopf und -block der Brennkraftmaschine verwendet werden, und ferner mit Durchtrittsöffnungen für Kühlwasser bzw. Öl, nicht dargestellt) versehen.

Die in der Regel aus Federstahl hergestellten und ansonsten planen Deckbleche 1 sind mit gewölbten, im eingespannten Zustand mit dem Trägerblech 2 jeweils eine umlaufende Dichtungslinie bildenden Sicken 4 versehen, die mit Abstand unter Belassung eines geraden Blechabschnitts 5 im Randbereich der jeweiligen Öffnung 3 angeordnet und zum Trägerblech 2 gerichtet sind.

Das ansonsten plane Trägerblech 2 ist benachbart zur jeweiligen Öffnung 3 mit einer um diese umlaufenden, im wesentlichen trapezförmigen Sicke 6 versehen, die sich bezüglich der Öffnung 3 radial innenseitig von dem durch die um die Öffnung 3 umlaufenden Sicke 4 gebildeten Bereich befindet.

Wenn das Trägerblech 2 beispielsweise aus einem Federstahl besteht, ist die Sicke 6 im wesentlichen elastisch verformbar, wenn es jedoch beispielsweise aus aus einem Stahl St2 od.dgl. besteht, ist sie im wesentlichen plastisch verformbar.

Die im wesentlichen trapezförmige Sicke 6 kann in Umfangsrichtung in Höhe und/oder Breite veränderlich gestaltet sein.

Zusätzlich ist ein Ring 7 aus Blech vorgesehen, der auf der konkaven Seite der im wesentlichen trapezförmigen Sicke 6 diese überdekkend angeordnet ist. Der Ring 7 ist auf den Bereich beschränkt, der im wesentlichen von dem geraden Blechabschnitt 5 des benachbarten Deckblechs 1 überdeckt wird, d.h. auch die Sicke 4 des zum Ring 7 benachbarten Deckblechs 1 stützt sich am Trägerblech 2 ab. Die Stärke des Rings 7 entspricht zweckmäßigerweise im wesentlichen der Höhe der trapezförmigen Sicke 6, so daß der Verformungsbegrenzer im wesentlichen mittig zwischen den Deckblechen 1 angeordnet ist.

Der Ring 7 ist vorteilhafterweise an den Trägerblech 1 beispielsweise durch Schweißpunkte, Kleben od.dgl. befestigt.

Der jeweilige Verformungsbegrenzer zum Schutz der jeweiligen, einander zugekehrten Sicken 4 der Deckbleche 1 wird somit durch die trapezförmige Sicke 6 im Trägerblech 1 und durch den diese an deren konkaven Seite überdeckenden Ring 7 gebildet.

Gegebenenfalls kann diese Zylinderkopfdichtung auch zweilagig, d.h. mit einem Deckblech 1 und dem Trägerblech 2 sowie dem Ring 7, eingesetzt werden.

Bei der in Fig. 2 dargestellten Ausführungsform sind zwei Trägerbleche 2 vorgesehen, die jeweils mit einer im wesentlichen trapezförmigen Sicke 6 versehen und spiegelbildlich zueinander angeordnet sind. Diese Anordnung ermöglicht größere Dichtspalthöhen zwischen Zylinderkopf und -block. Auch hier können die Sicken 6 elastisch oder plastisch verformbar bzw. in Umfangsrichtung in Höhe und/oder Breite veränderlich gestaltet sein. Gegebenenfalls kann zwischen den beiden Trägerblechen 2 noch ein Beilageblech angeordnet sein.

Die Oberflächen der Deckbleche 1 und gegebenenfalls der Trägerbleche 2 und der Ringe 7 werden gewöhnlich mit einer dünnen Elastomerbeschichtung in einer Stärke etwa entsprechend der Rauhheit der zu verspannenden Bauteile versehen, um eine Mikroabdichtung zu gewährleisten.

## Patentansprüche

1. Metallische Zylinderkopfdichtung für eine Brennkraftmaschine, umfassend zwei flache Deckbleche (1), die mehrere, nebeneinander angeordnete Öffnungen (3) entsprechend den Brennkammern der Brennkraftmaschine und jeweils eine um die jeweilige Öffnung (3) herum verlaufende Sicke (4) aufweisen, wobei die Sicke (4) zum Öffnungsrand beabstandet angeordnet und ein konzentrisch zur Sicke (4) angeordneter, als Brennraumüberhöhung und als Verformungsbegrenzer für die Sicke (4) dienender, ringförmiger Überhöhungsabschnitt vorgesehen ist, und ein flaches, die Sicken (4) abstützendes, Trägerblech (2), wobei der jeweilige Überhöhungsabschnitt durch eine im wesentlichen trapezförmige und im wesentlichen plastisch verformbare Sicke (6) im Trägerblech (2), die benachbart zum Öffnungsrand im Bereich einwärts von der Sicke (4) des Deckblechs (1) angeordnet ist, und durch einen Ring (7) gebildet wird, der auf der konkaven Seite der im wesentlichen trapezförmigen Sicke (6) diese überdeckend angeordnet ist, **dadurch gekennzeichnet, daß** die Sicke (4) eine Vollsicke ist, und daß das Trägerblech (2) im wesentlichen plan ist.

2. Metallische Zylinderkopfdichtung für eine Brennkraftmaschine, umfassend zwei flache Deckbleche (1), die mehrere nebeneinander angeordnete Öffnungen (3) entsprechend den Brennkammern der Brennkraftmaschine und jeweils eine um die jeweilige Öffnung (3) herum verlaufende Sicke (4) aufweisen, wobei die Sicke (4) zum Öffnungsrand beabstandet angeordnet und ein konzentrisch zur Sicke (4) angeordneter, als Brennraumüberhöhung und als Verformungsbegrenzer für die Sicke (4) dienender, ringförmiger Überhöhungsabschnitt vorgesehen ist, und zwei flache, die Sicken (4) abstützende, Trägerbleche (2'), wobei der jeweilige Überhöhungsabschnitt durch eine im wesentlichen trapezförmige und im wesentlichen plastisch verformbare Sicke (6) im jeweiligen Trägerblech (2'), die benachbart zum Öffnungsrand im Bereich einwärts von der Sicke (4) des Deckblechs (1) angeordnet ist, gebildet wird, wobei die Trägerbleche (2') spiegelsymmetrisch angeordnet sind, **dadurch gekennzeichnet, daß** die Sicke (4) eine Vollsicke ist, und daß die Trägerbleche (2') im wesentlichen plan sind.

3. Dichtung nach Anspruch 1, **dadurch gekennzeichnet, daß** die Stärke des Rings (7) im wesentlichen der Höhe der trapezförmigen Sicke (6) entspricht.

4. Dichtung nach einem der Ansprüche 1 bis 3, **dadurch gekennzeichnet, daß** die im wesentlichen trapezförmige Sicke (6) in Umfangsrichtung in Höhe und/oder Breite veränderlich gestaltet ist.

## Claims

1. Metal cylinder head gasket for an internal combustion engine, comprising two flat cover plates (1), which have a plurality of openings (3) arranged one next to the other in correspondence with the combustion chambers of the internal combustion engine and have a bead (4) extending around each opening (3), the bead (4) being arranged at a distance from the edge of the opening and there being provided an annular raised portion arranged concentrically with the bead (4) and serving to provide additional height to the combustion chamber and as a deformation limiter for the bead (4), and a flat carrier plate (2) which supports the beads (4), each raised portion being formed by a substantially trapezoidal and substantially plastically deformable bead (6) in the carrier plate (2), which bead (6) is arranged next to the edge of the opening in the region lying inwardly of the bead (4) of the cover plate (1), and by a ring (7) which is arranged on the concave side of the substantially trapezoidal bead (6) so as to cover the latter, **characterised in that** the bead (4) is a full bead and the carrier plate (2) is substantially planar.

2. Metal cylinder head gasket for an internal combustion engine, comprising two flat cover plates (1), which have a plurality of openings (3) arranged one next to the other in correspondence with the combustion chambers of the internal combustion engine and have a bead (4) extending around each opening (3), the bead (4) being arranged at a distance from the edge of the opening and there being provided an annular raised portion arranged concentrically with the bead (4) and serving to provide additional height to the combustion chamber and as a deformation limiter for the bead (4), and two flat carrier plates (2') which support the beads (4), each raised portion being formed by a substantially trapezoidal and substantially plastically deformable bead (6) in the respective carrier plate (2'), which bead (6) is arranged next to the edge of the opening in the region lying inwardly of the bead (4) of the cover plate (1), the carrier plates (2') being arranged mirror-symmetrically, **characterised in that** the bead (4) is a full bead and the carrier plates (2') are substantially planar.

3. Gasket according to claim 1, **characterised in that** the thickness of the ring (7) corresponds substantially to the height of the trapezoidal bead (6).

4. Gasket according to any one of claims 1 to 3, **characterised in that** the substantially trapezoidal bead (6) is configured to vary in height and/or width circumferentially.

## Revendications

1. Joint de culasse métallique pour un moteur à combustion interne, comprenant deux tôles protectrices plates (1), qui présentent plusieurs orifices (3) adjacents, correspondant aux chambres de combustion du moteur à combustion interne, et une nervure (4) entourant chaque orifice (3) étant espacée du bord de l'orifice, une section en surélévation annulaire étant prévue, disposée concentriquement à la nervure (4), servant de surélévation à la chambre de combustion et d'élément limitant la déformation pour la nervure (4), et une tôle porteuse (2) plate supportant les nervures (4), la section en surélévation étant formée par une nervure (6) sensiblement trapézoïdale et déformable de manière sensiblement plastique dans la tôle porteuse (2), et disposée adjacente au bord de l'orifice dans la zone à l'intérieur de la nervure (4) de la tôle protectrice (1), et par une bague (7) qui est disposée du côté concave de la nervure (6) sensiblement trapézoïdale en recouvrant celle-ci,
**caractérisé en ce que** la nervure (4) est une nervure pleine, et **en ce que** la tôle porteuse (2) est sensiblement plane.

2. Joint de culasse métallique pour un moteur à combustion interne, comprenant deux tôles protectrices plates (1) qui présentent plusieurs orifices (3) adjacents, correspondant aux chambres de combustion du moteur à combustion interne, et une nervure (4) entourant chaque orifice (3), la nervure (4) étant disposée en étant espacée du bord de l'orifice et une section en surélévation annulaire étant prévue, disposée concentriquement à la nervure (4), servant de surélévation à la chambre de combustion et d'élément limitant la déformation pour la nervure (4), et deux tôles porteuses (2') plates supportant les nervures (4), la section en surélévation (6) étant formée par une nervure sensiblement trapézoïdale et déformable de manière sensiblement plastique dans la tôle porteuse (2') respective, et disposée adjacente au bord de l'orifice dans la zone à l'intérieur de la nervure (4) de la tôle protectrice (1 ), en sorte que les tôles protectrices (2') sont disposées de manière symétrique,
**caractérisé en ce que** la nervure (4) est une nervure pleine, et **en ce que** les tôles porteuses (2') sont sensiblement planes.

3. Joint de culasse selon la revendication 1, **caractérisé en ce que** l'épaisseur de la bague (7) correspond sensiblement à la hauteur de la nervure (6) trapézoïdale.

4. Joint de culasse selon l'une quelconque des revendications 1 à 3, **caractérisé en ce que** la nervure (6) sensiblement trapézoïdale est agencée de manière à pouvoir être modifiée en hauteur et / ou en largeur circonférentiellement.
